# EUROPEAN PATENT SPECIFICATION

(11) **EP 3 643 528 B1**
(45) Date of publication and mention of the grant of the patent: **23.06.2021**
(21) Application number: 19202918.9
(22) Date of filing: 14.10.2019
(51) Int. Cl.: B60C 11/16

(54) **TIRE STUD AND STUDDED TIRE**
REIFENSPIKE UND BESPIKTER REIFEN
CRAMPON DE PNEU ET PNEU À CRAMPONS

(30) Priority: 22.10.2018 US 201816166207
(43) Date of publication of application: 29.04.2020
(73) Proprietor: The Goodyear Tire & Rubber Company, Akron, OH 44316 (US)
(72) Inventor: PONS, Frédéric Michel-Jean, F-57100 Thionville (FR); CARON, Arnaud, B-6750 Signeulx (BE)
(74) Representative: Kutsch, Bernd

(56) References cited:
- EP-A1- 3 238 961
- WO-A1-2018/078939
- RU-C1- 2 148 498

## Description

### Field of Invention

The present invention relates to stud pins installed in a tread portion of a pneumatic tire and, more particularly, to a pneumatic tire equipped with the stud pins.

### Background of the Invention

Conventional snow tires may be equipped with stud pins installed in the tread portion of the tire to allow the tire to grip an icy or snowy road surface. A stud pin is typically embedded into a stud pin installation hole provided in the tread portion of the tire. The stud pin may broaden a pin bore and be tightly embedded therein so that the stud pin does not fall out of the stud pin installation hole due to braking, driving, or lateral and vertical forces received from the road surface while the tire is rotating.

The stud pin may have a pillar and a pin. The pillar may be fitted into a close-ended hole formed in the tread portion of the tire and thereby be secured to the tread surface. The pin may protrude radially outward from the pillar. The pillar may be asymmetrically and/or irregularly shaped as it extends radially outward from the tread portion.

When these studded snow tires are used on concrete or asphalt road surfaces not coved by snow or ice, these harder, bare road surfaces may dislodge the stud pins. Even for tires equipped with the above-mentioned stud pins, there are cases where the stud pins often fall out (pin drop) due to the forces on the tire while a vehicle is driving, breaking, and/or cornering on a concrete or asphalt road. There will be a large amount of pin drop if there is any clawing force applied between the stud pin and the road surface. The clawing force may overcome the force retaining the stud pin in the tread rubber material of the tire. Therefore, there is a demand for further improvement regarding pin drop for these pneumatic stud tires, as well as, the other performance characteristics of the stud pins (e.g., traction, durability, wear, etc.).

RU 2 148 498 C1 describes a stud in accordance with the preamble of claim 1.

Further studs with a polygonal shape of a body or pin portion are known from EP 3 238 961 A1 and WO 2018/078939 A1.

### Summary of the Invention

The invention relates to a stud in accordance with claim 1 and to a tire in accordance with claim 8.

Dependent claims refer to preferred embodiments of the invention.

A stud in accordance with a preferred aspect the present invention, is configured to be inserted into a tread portion of a tire. The stud includes a tip end protruding from the tread portion for contacting a surface, and a base including a flanged bottom portion provided on an end opposite the tip end and extending radially outward, a stump portion provided between the bottom portion and the tip end, and a shank portion interconnecting the stump portion and the bottom portion. The base is embedded and secured in the tread portion of the tire in which the stud is installed. The bottom portion has a tear-drop shape consisting of three planar sides and one semi-cylindrical side. The stump portion has a polygonal shape consisting of three concave sides, two convex sides, and one planar side.

A stud in accordance with another preferred aspect the present invention has a tip end having a hexagonal-like cross-sectional shape extending radially outward from a radially outermost surface of the stump portion of the base.

According to still another preferred aspect of the invention, the tip end has a cross-section with three concave surfaces with three planar surfaces.

According to yet another preferred aspect of the invention, the cross-section of the stump portion includes a flat side circumferentially disposed between first and second concave hollows and two convex sides circumferentially separated by a third concave hollow.

According to still another preferred aspect of the invention, the cross-section of the stump portion includes a flat side circumferentially disposed between first and second concave hollows and first and second convex sides circumferentially separated by a third concave hollow. The first concave hollow is adjacent the first convex side and the second concave hollow is adjacent the second convex side.

According to yet another preferred aspect of the invention, the bottom portion has a tear drop cross-section with three planar sides and one semi-cylindrical side.

According to still another preferred aspect of the invention, the shank portion has a thinner cross-section compared to the bottom portion.

According to yet another preferred aspect of the invention, the shank portion has a thinner cross-section compared to the trunk portion.

According to still another aspect preferred aspect of the invention, the shank portion has an oval-shaped cross-section.

According to yet another preferred aspect of the invention, the tip end has a radially outermost surface with four generally planar surfaces converging to form an outer point for improving engagement of the stud with an ice surface.

A first stud configuration for a tire tread in accordance with a preferred aspect of the present invention includes: a first plurality of studs disposed in a first region of the tire tread, the first plurality of studs each having a first orientation; a second plurality of studs disposed in a second region of the tire tread, the second plurality of studs each having a second orientation rotated +90 degrees relative to a radial axis; and a third plurality of studs disposed in a third region of the tire tread, the third plurality of studs each having a third orientation rotated -90 degrees relative to the radial axis.

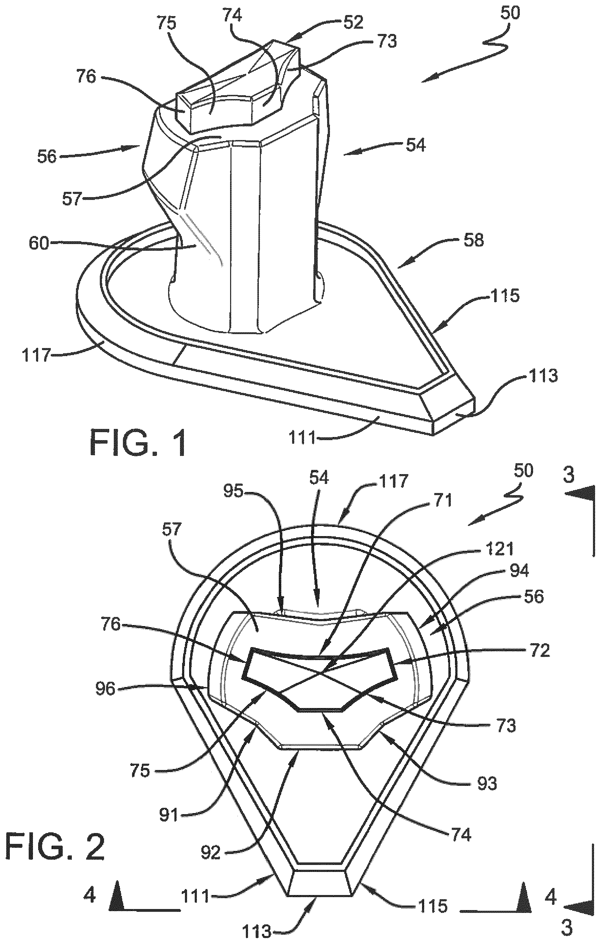

According to another preferred aspect of the invention, the first plurality of studs, the second plurality of studs, and the third plurality of studs each have an identical construction (e.g., all studs are the stud 50 shown in FIG. 1).

According to still another preferred aspect of the invention, the first region is a shoulder portion of the tread portion, the second region is a center portion of the tread portion, and the third region is another shoulder portion of the tread portion.

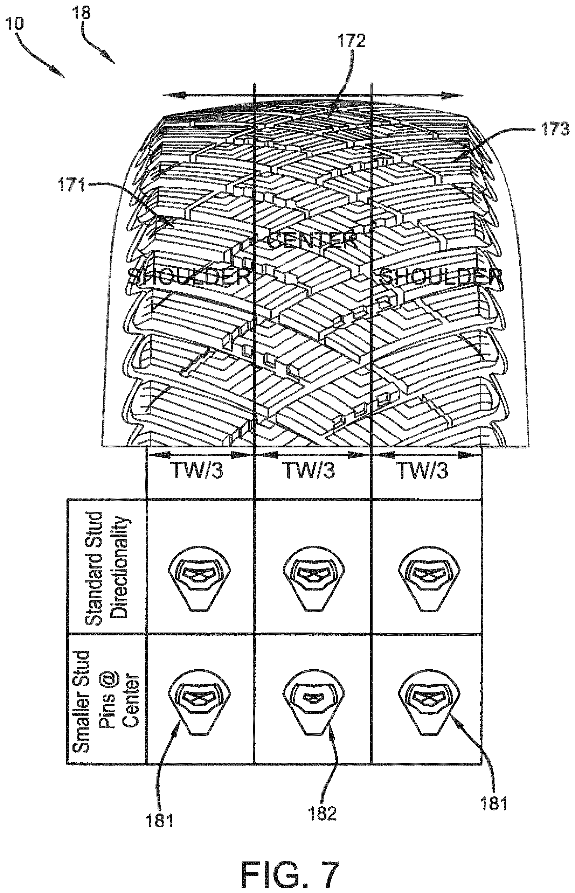

According to yet another preferred aspect of the invention, the first plurality of studs each have a tip end with a first size 181, the second plurality of studs each have a tip end with a second size 182, and the third plurality of studs each have a tip end with the first size 181. The first size 181 is larger than the second size 182 (FIG. 7).

According to still another preferred aspect of the invention, the first plurality of studs each have a tip end with a first size 182, the second plurality of studs each have a tip end with a second size 181, and the third plurality of studs each have a tip end with the first size 182. The second size 181 is larger than the first size 182 (FIG. 7).

A second stud configuration for a tire tread in accordance with a preferred aspect of the present invention includes: a first plurality of studs disposed in a first region of the tire tread, the first plurality of studs each having a first orientation; a second plurality of studs disposed in a second region of the tire tread, the second plurality of studs each having a second orientation rotated +45 degrees relative to a radial axis; and a third plurality of studs disposed in a third region of the tire tread, the third plurality of studs each having a third orientation rotated -45 degrees relative to the radial axis.

A stud configured to be inserted into a tread of a tire is disclosed. The stud comprises a tip end configured for protruding from the tread portion for contacting a road surface; a base including a flanged bottom portion provided on an end of the stud opposite the tip end and, when the stud is inserted in the tread, extending radially outwards, a stump portion provided between the bottom portion and the tip end, and a shank portion interconnecting the stump portion and the bottom portion of the base, the base being configured for being embedded and secured in the tread of the tire in which the stud is configured to be installed. The circumferential line or cross-section of the flanged bottom portion, when viewed in top view onto the stud along an axis from the tip end to the flanged bottom portion, consists of or comprises one semi-cylindrical or semi-ellipsoidal side and either three planar sides, one planar side and two concave sides, or two planar sides and one semi-cylindrical, semi-ellipsoidal or concave side.

Preferably, the circumferential line or cross-section of the stump portion when viewed in top view onto the stud along an axis from the tip end to the flanged bottom portion, has a polygonal shape preferably consisting of or comprising (i) three concave sides, two convex sides, and one planar side, (ii) three concave sides and three convex sides, or (iii) three concave sides, and three planar sides.

Preferably, the circumferential line or cross-section of the flanged bottom portion, when viewed in top view onto the stud along an axis from the tip end to the flanged bottom portion, has essentially the shape of a tear-drop.

Preferably, the tip end has, when viewed in top view onto the stud along an axis from the tip end to the flanged bottom portion, a hexagonal-like cross-sectional shape, the tip end extending radially outward from a radially outermost surface of the stump portion (56) of the base.

Preferably, the tip end has, when viewed in top view onto the stud along an axis from the tip end to the flanged bottom portion, a circumferential line or cross-section consisting of or comprising (i) three concave sides, two convex sides, and one planar side, (ii) three concave sides and three convex sides, or (iii) three concave sides and three planar sides.

Preferably the cross-section or circumferential line of the stump portion includes a flat side circumferentially disposed between first and second concave hollows and two convex sides circumferentially separated by a third concave hollow.

Preferably, the cross-section or circumferential line of the stump portion includes a flat side circumferentially disposed between first and second concave hollows and first and second convex sides circumferentially separated by a third concave hollow, the first concave hollow being adjacent the first convex side and the second concave hollow being adjacent the second convex side.

Preferably, the shank portion has a thinner cross-section compared to the flanged bottom portion and/or the shank portion has a thinner cross-section compared to the stump portion.

Preferably, the tip end has a radially outermost surface with three or four preferably generally planar surfaces converging like in a pyramid to form an outer point.

The tire in accordance with the invention preferably has a first plurality of first studs disposed in a first region of the tread, the first studs of the first plurality of first studs each having a first orientation direction, and a second plurality of second studs disposed in a second region of the tread, the second studs of the second plurality of studs each having a second orientation direction, wherein the first studs and/or the second studs are studs as described above, and wherein (i) the first orientation direction is rotated in a range of from 75 to 105 degrees, preferably 90 degrees, relative to the second orientation direction, and/or (ii) wherein the first orientation direction is parallel to the circumferential direction of the tire or makes an angle in a range of from +15 degrees to -15 degrees with the circumferential direction of the tire and the second orientation direction is parallel to the axial direction of the tire or makes an angle in a range of from +15 degrees to -15 degrees with the axial direction of the tire.

Preferably, the tire further comprises a third plurality of third studs disposed in a third region of the tread, the third studs of the third plurality of studs each having a third orientation direction; wherein
(i) the third plurality of third studs are studs as described above; and/or
(ii) the third orientation direction is parallel to the first orientation direction or makes an angle in a range of from +15 degrees to -15 degrees with the first orientation direction; and/or
(iii) the third orientation direction is perpendicular to the second orientation direction or makes an angle in a range of from +15 degrees to -15 degrees with the second orientation direction.

Preferably the first studs and the second studs or the first, second and third studs each have an identical construction.

Preferably, the first studs each have a tip end with a first size, the second studs each have a tip end with a second size, and the third studs each have a tip end with the said second size, wherein the first size is larger than the second size or the second size is larger than the first size.

Preferably, the first orientation direction makes an angle in a range of from +30 degrees to +60 degrees with the axial direction of the tire and the second orientation direction makes an angle in a range of from -30 degrees to -60 degrees with the axial direction of the tire.

### Definitions

The following definitions are controlling for the present invention.

"Axial" and "Axially" means the lines or directions that are parallel to the axis of rotation of the tire.

"Axially Inward" means in an axial direction toward the equatorial plane.

"Axially Outward" means in an axial direction away from the equatorial plane.

"Circumferential" means circular lines or directions extending along the perimeter of the surface of the annular tread perpendicular to the axial direction.

"Equatorial Plane" means the plane perpendicular to the tire's axis of rotation and passing through the center of its tread; or the plane containing the circumferential centerline of the tread.

"Radial" and "radially" mean directions radially away from the axis of rotation of the tire.

"Shoulder" means the upper portion of sidewall just below the tread edge.

"Tread" means the ground contacting portion of a tire.

### Brief Description of the Drawings

The present invention will be better understood through reference to the following description and the appended drawings, in which:
FIG. 1 schematically represents an external perspective view of a stud in accordance with the present invention.
FIG. 2 schematically represents an external orthographic radial view of the stud of FIG. 1.
FIG. 3 schematically represents a sectional view taken along line "3-3" of part of the stud of FIG. 2.
FIG. 4 schematically represents a sectional view taken along line "4-4" of part of the stud of FIG. 2.
FIG. 5 schematically represents a radial orthographic view of a tread for use with a configuration of the studs of FIG. 1 in accordance with present invention.
FIG. 6 schematically represents a radial orthographic view of a tread for use with another configuration of the stud in accordance with present invention of FIG. 1.
FIG. 7 schematically represents a general illustration of a tread for use with still another configuration of the studs.

### Detailed Description of Example Embodiments of the Present Invention

The following is an explanation of a pneumatic (or non-pneumatic) tire assembly according to the present invention. The assembly may be similar to the pneumatic tire configuration disclosed in US-B-10,035,382. FIG. 1 of US-B-10,035,382 schematically represents a tire cross-sectional view illustrating a cross-section of a pneumatic tire. The pneumatic tire according to the present invention is a tire with studs embedded in a tread portion of the pneumatic tire.

The tire circumferential direction explained hereafter refers to the rotation direction (both rolling directions) of a tread surface of a studded tire 10 about a tire rotation axis. The radial direction of the tire refers a direction radiating about a direction extending orthogonally to/from the tire rotation axis. The outer side in the radial direction of the studded tire 10 refers to the side away from the tire rotation axis in the radial direction of the studded tire. The tire width direction is a direction parallel to the tire rotational axis, and the outer side in the tire width direction refers to two sides away from a tire center line of the studded tire 10.

A studded tire 10 in accordance with the present invention preferably include a carcass ply layer, a belt layer, and bead cores, which serve as a frame for the studded tire. The studded tire 10 further includes a tread member 18, sidewall members, optional bead filler members, optional rim cushion members, and an innerliner member, around the frame for the studded tire.

The carcass ply layer may be formed in a toroidal shape wound between a pair of circular ring-shaped bead cores and may include rubber coated organic fiber carcass ply members. The carcass ply layer may be configured from multiple carcass ply members or a single carcass ply member. The belt layer may be provided on the outer side in the tire radial direction of the carcass ply layer, configured from two belt members. The belt layer may be constructed of rubber-coated steel cords arranged at a predetermined angle, such as 20 to 30 degrees, relative to the tire circumferential direction. The inclination direction of the steel cords of the two layers of the belt members may be opposite each other.

The tread member 18 may be disposed on an outer side in the tire radial direction of the belt layer. The sidewall members may be connected to two sides of the tread member 18 to form two sidewalls. The tread member 18 may configured from two layers of rubber, an upper tread member disposed on an outer side in the tire radial direction and a lower tread member disposed on an inner side in the tire radial direction. The rim cushion members may be disposed at inner sides in the tire radial direction of the sidewall members and come into contact with a rim on which the studded tire 10 may be fitted. A bead filler material may be disposed between a portion of the carcass ply layer before the carcass ply layer is wound around the bead cores and a portion of the carcass ply layer. The inner liner member may be disposed on an inner surface of the studded tire 10 adjacent a tire cavity region that is filled gas enclosed by the studded tire and the rim. The studded tire 10 may have this tire structure or any other suitable structure, pneumatic and/or non-pneumatic.

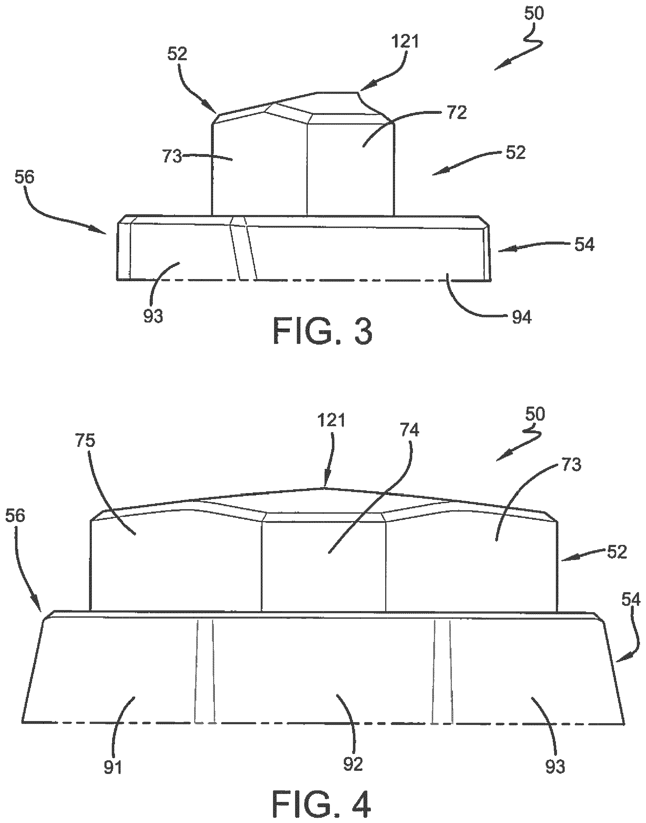

FIG. 1 shows an external perspective view of a stud 50 in accordance with an embodiment of the present invention. FIG. 2 shows a radially inward view of the stud 50 of FIG. 1. FIGS. 3-4 show side views of the stud 50 of FIGS. 1-2. The stud 50 includes a radially outer tip end 52 and a base 54 for partially inserting into corresponding recesses in the tread member 18. The base 54 may thus be at least partially embedded inside a stud pin installation hole in the tread portion 18 of the tire 10 in which it is installed. The stud 50 is secured to the tire 10 by side surfaces of the stud pin installation hole pressing and clamping onto part of the base 54.

The base 54 may include a stump portion 56, a bottom portion 58, and a shank portion 60 radially interconnecting the bottom portion and the stump portion. The bottom portion 58 is located at the radially opposite end of the stump portion 56 and the tip end 52. The stud 50 is thus formed by the bottom portion 58, the shank portion 60, and the stump portion 56 in that radial ascending order.

As illustrated in FIGS. 1-4, when the stud 50 is installed in the tread portion 18, the tip end 52 is the portion of the stud 50 that protrudes radially from the tread surface, contacts the road surface, and claws into ice and/or snow. The tip end 52 preferably has a hexagonal-like shape (FIG. 2) extending radially outward from a radially outermost surface of the stump portion 56 of the base 54. The cross-section of the tip end 52 preferably includes three concave curved hollows 71, 73, 75 with three planar sides 72, 74, 76. That is, the outer peripheral surface of the tip end 52 comprises three cavities 71, 73, 75 and three flat sides 72, 74, 75 (FIG. 2). Other suitable numbers of cavities and sides may be configured for the tip end 52.

The stump portion 56 is a flange located between the tip end 52 and the shank portion 60. In other words, the tip end 52 is formed radially extending outward from the flat radially outer surface 57 of the stump portion 56. When this stud 50 is installed in the tire 10, the stump portion 56 is at least partially embedded inside the tread member 18. The shape of the stump portion 56 is preferably similarly shaped to the tip end 52 with a flat side 92 circumferentially between two concave hollows 91, 93 and two convex sides 94, 96 circumferentially separated by a third concave hollow 95. The outer peripheral surface 91, 92, 93, 94, 95, 96 of the stump portion 56 contacts and presses against the inside surface of the installation holes of the tread member 18. The cross-section of the stump portion 56 may alternatively be substantially triangular, quadrilateral, pentagonal, hexagonal (FIG. 2), or other polygonal shape.

The bottom portion 58 is a flange located opposite the tip end 52. The cross-section of the bottom portion 58 is preferably a tear-drop shape with three planar sides 111, 113, 115 and one semicircular side 117 (FIG. 2). The cross-section of the bottom portion 58 may alternatively be a substantially triangular, quadrangular, pentagonal, or hexagonal shape. Thus, the tip end 52, stump portion 56, and bottom portion 58 each form a generally arrowhead shape with each of the arrowheads pointing in the same direction (downward in FIG. 2).

Generally, the bottom portion 58 is inserted into a corresponding similarly tear-drop shaped stud pin installation hole in the tread member 18 of the tire 10 thereby securing the orientation of the stud 50 and preventing rotation of the stud during use. Alternatively, the stud pin installation hole may be circular or other suitable shape allowing the bottom portion 58 to be secured against rotation.

The shank portion 60 connects the stump portion 56 and the bottom portion 58. The shank portion 60 preferably has a smaller, or thinner, cross-section compared to the trunk portion 56 and the bottom portion 58. The cross-section of the shank portion 60 is preferably generally oval-shaped (FIG. 1).

The radially outermost surface of the tip end 52 preferably has four generally planar surfaces forming an outer point 121 for improving engagement of the stud 50 with an ice surface (FIGS. 1 & 3). The tip end 52 and the base 54 may be constructed of the same metallic material or from different metallic materials. For example, the tip end 52 and the base 54 may be made from aluminum. The tip end 52 may be made from tungsten carbide and the base 54 may be made from aluminum. If the tip end 52 and the base 54 are made from different metallic materials, the tip end 52 may be fixed to the base 54 by pushing and interference fitting a projection (not shown) of the tip end 52 into a hole (not shown) of the stump portion 56 of the base 54.

If the side surface of the stud installation hole is in contact with the semicircular side 117 of the bottom portion 58 when the stud 50 enters a cylindrical stud pin installation hole in the tire 10, the planar side 113 opposite the semicircular side 117 of the bottom portion 58 dig into the opposite side surface of the cylindrical stud pin installation hole of the tread member 18 thereby inhibiting the bottom portion 58, and the entire stud 50, from rotating during use. Generally, no matter the shape of the stud installation hole, the rubber of the tread member 18 conforms to the shape and various surfaces of the stud 50 to secure the stud to the tread member.

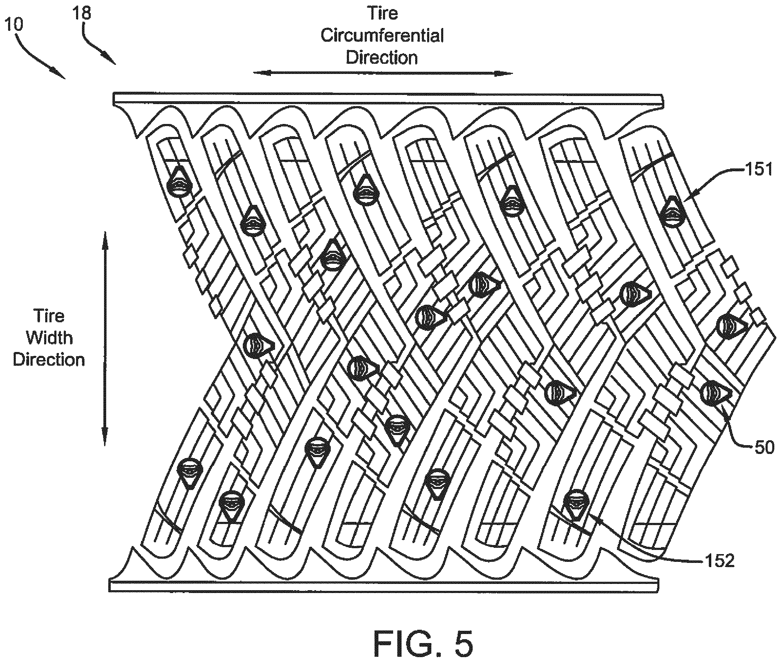

FIG. 5 shows a schematic plan view of a portion of a tread pattern for use with the stud 50. The tire 10 may have a designated rotational direction indicating a tire circumferential direction. The tread pattern may include circumferential main grooves, first angled grooves, second angled grooves, and third angle grooves (FIG. 5). The grooves preferably have an exemplary depth of 8.5 mm to 10.5 mm and a maximum width of 12.0 mm. The tread pattern illustrated in FIG. 5 is merely one example tread pattern. Other suitable tread patterns may also be used with stud 50. As shown in FIG. 5, some of the studs 50 have a first orientation and other identical studs 151, 152 have a second orientation rotated 90 degrees or -90 degrees from the first orientation.

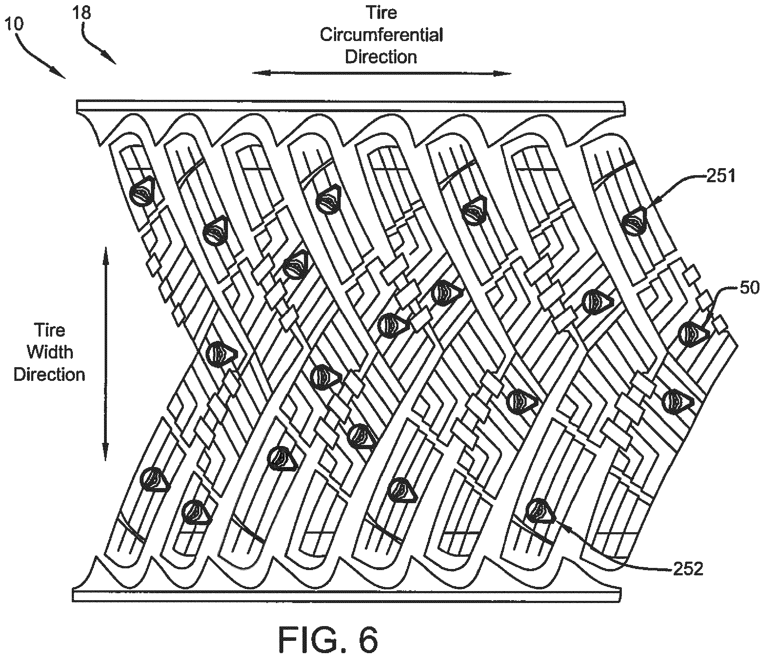

FIG. 6 shows a schematic plan view of a portion of a tread pattern for use with the stud 50. The tire 10 may have a designated rotational direction indicating a tire circumferential direction. The tread pattern may include circumferential main grooves, first angled grooves, second angled grooves, and third angle grooves (FIG. 6). The grooves may have an exemplary depth of 8.5 mm to 10.5 mm and a maximum width 12.0 mm. The tread pattern illustrated in FIG. 6 is merely one example tread pattern. Other suitable tread patterns may also be used with stud 50. As shown in FIG. 6, some of the studs 50 have a first orientation and other identical studs 251, 252 have a second orientation rotated 45 degrees or -45 degrees from the first orientation.

As shown in FIG. 7, tread contact pressure (tire tread contact with pavement or icy roads) is higher at the tread shoulders 171, 173 than the tread center 172. Thus, in accordance with the present invention, the tip ends of the studs 181 in the tread shoulders 171, 173 are preferably larger than the tip ends of the studs 182 in the tread center 172 to compensate for lower contact pressure in the tread center. Since the effectiveness of the studs 181, 182 depends on ice hardness and the capability of the tip end of the stud pin to penetrate the ice, larger tip ends may perform better than smaller tip ends in "warmer", relatively soft ice, such as -2°C to - 5°C. Conversely, smaller tip ends may perform better than larger tip ends in "colder", relatively hard ice, such as -20°C to -30°C. Dual stud types/sizes of studs and tip ends in a single tread may thereby perform well in both of the soft ice and hard ice circumstances described above.

The tip ends of the studs of the tires and configurations of such tip ends according to the present invention have been described above in exemplary detail. However, a tire, a stud, and/or configuration according to the present invention may not be limited to the above examples but only to the appended claims.

## Claims

1. A stud configured to be inserted into a tread (18) of a tire, the stud (50) comprising:
a tip end (52) configured for protruding from the tread portion (18) for contacting a road surface;
a base (54) including a flanged bottom portion (58) provided on an end of the stud (50) opposite the tip end (52) and, when the stud (50) is inserted in the tread (18), extending radially outwards, a stump portion (56) provided between the bottom portion (58) and the tip end (52), and a shank portion (60) interconnecting the stump portion (56) and the bottom portion (58) of the base (54), the base (54) being configured for being embedded and secured in the tread (18) of the tire in which the stud (50) is configured to be installed;
wherein the circumferential line or cross-section of the flanged bottom portion (58), when viewed in top view onto the stud (50) along an axis from the tip end (52) to the flanged bottom portion (58), consists of or comprises one semi-cylindrical (117) or semi-ellipsoidal side and either three planar sides (111, 113, 115), one planar side and two concave sides, or two planar sides and one semi-cylindrical, semi-ellipsoidal or concave side;
**characterized in that** the tip end (52) has, when viewed in top view onto the stud (50) along an axis from the tip end (52) to the flanged bottom portion (58), a circumferential line or cross-section consisting of or comprising (i) three concave sides (71, 73, 75), two convex sides, and one planar side (74), (ii) three concave sides (91, 93, 95) and three convex sides, or (iii) three concave sides (71, 73, 75) and three planar sides (72, 74, 76); and/or **in that**
the cross-section or circumferential line of the stump portion (56) includes a flat side (92) circumferentially disposed between first and second concave hollows (91, 93) and two convex sides (94, 96) circumferentially separated by a third concave hollow (95).

2. The stud of claim 1 wherein the circumferential line or cross-section of the stump portion (56) when viewed in top view onto the stud (50) along an axis from the tip end (52) to the flanged bottom portion (58), has a polygonal shape preferably consisting of or comprising (i) three concave sides (91, 93, 95), two convex sides (94, 96), and one planar side (92), (ii) three concave sides (91, 93, 95) and three convex sides, or (iii) three concave sides (91, 93, 95), and three planar sides.

3. The stud of claim 1 or 2 wherein the circumferential line or cross-section of the flanged bottom portion (58), when viewed in top view onto the stud (50) along an axis from the tip end (52) to the flanged bottom portion (58), has essentially the shape of a tear-drop.

4. The stud of at least one of the previous claims wherein the tip end (52) has, when viewed in top view onto the stud (50) along an axis from the tip end (52) to the flanged bottom portion (58), a hexagonal-like cross-sectional shape, the tip end (52) extending radially outward from a radially outermost surface of the stump portion (56) of the base (54).

5. The stud of at least one of the previous claims wherein the cross-section or circumferential line of the stump portion (56) includes a flat side (92) circumferentially disposed between first and second concave hollows (91, 93) and first and second convex sides (94, 96) circumferentially separated by a third concave hollow (95), the first concave hollow (91) being adjacent the first convex side (94) and the second concave hollow (93) being adjacent the second convex side (96).

6. The stud of at least one of the previous claims wherein the shank portion (60) has a thinner cross-section compared to the flanged bottom portion (58) and/or wherein the shank (60) portion has a thinner cross-section compared to the stump portion (56).

7. The stud of at least one of the previous claims wherein the tip end (52) has a radially outermost surface with three or four preferably generally planar surfaces converging to form an outer point (121).

8. A tire having a tread (18), the tread (18) comprising a plurality of studs (50) in accordance with at least one of the previous claims.

9. The tire of claim 8 having a first plurality of first studs (50) disposed in a first region (172) of the tread (18), the first studs (50) of the first plurality of first studs (50) each having a first orientation direction of the flanged bottom portion (58) when viewed in top view onto the stud (50) along an axis from the tip end (52) to the flanged bottom portion (58), and a second plurality of second studs (151) disposed in a second region (171) of the tread (18), the second studs (151) of the second plurality of studs (151) each having a second orientation direction of the flanged bottom portion (58) when viewed in top view onto the stud (50) along an axis from the tip end (52) to the flanged bottom portion (58), wherein the first studs (50) and/or the second studs (151) are studs in accordance with at least one of the claims 1 to 9; and wherein (i) the first orientation direction is rotated in a range of from 75 to 105 degrees, preferably 90 degrees, relative to the second orientation direction, and/or (ii) wherein the first orientation direction is parallel to the circumferential direction of the tire or makes an angle in a range of from +15 degrees to -15 degrees with the circumferential direction of the tire and the second orientation direction is parallel to the axial direction of the tire or makes an angle in a range of from +15 degrees to -15 degrees with the axial direction of the tire.

10. The tire of claim 9 further comprising a third plurality of third studs (152) disposed in a third region (173) of the tread (18), the third studs (152) of the third plurality of studs (152) each having a third orientation direction of the flanged bottom portion (58) when viewed in top view onto the stud (50) along an axis from the tip end (52) to the flanged bottom portion (58); wherein
(i) the third plurality of third studs (152) are studs in accordance with at least one of the claims 1 to 9; and/or
(ii) the third orientation direction is parallel to the first orientation direction or makes an angle in a range of from +15 degrees to -15 degrees with the first orientation direction; and/or
(iii) the third orientation direction is perpendicular to the second orientation direction or makes an angle in a range of from +15 degrees to -15 degrees with the second orientation direction.

11. The tire of claim 9 or 10 wherein the first studs (50) and the second studs (151) or the first, second and third studs (50, 151, 152) each have an identical construction.

12. The tire of at least one of the claims 9 to 11 wherein the second region (171) is a shoulder portion of the tread (18), the first region (172) is a center portion of the tread (18), and the third region (173) is another shoulder portion of the tread (18).

13. The tire of at least one of the claims 9, 10 or 12 wherein the first studs (50) each have a tip end (52) with a first size, the second studs (151) each have a tip end (52) with a second size, and the third studs (152) each have a tip end (52) with the said second size, wherein the first size is larger than the second size or the second size is larger than the first size.

14. The tire of at least one of the claims 9 to 13 wherein the first orientation direction makes an angle in a range of from +30 degrees to +60 degrees with the axial direction of the tire and the second orientation direction makes an angle in a range of from -30 degrees to -60 degrees with the axial direction of the tire.

## Patentansprüche

1. Spike, der konfiguriert ist, um in eine Lauffläche (18) eines Reifens eingeführt zu werden, wobei der Spike (50) Folgendes umfasst:
ein Spitzenende (52), das zum Hervorragen aus dem Laufflächenabschnitt (18) zum Berühren einer Straßenoberfläche konfiguriert ist;
einen Fuß (54), der einen angeflanschten Bodenabschnitt (58), der an einem Ende des Spikes (50) gegenüber dem Spitzenende (52) bereitgestellt ist und, wenn der Spike (50) in die Lauffläche (18) eingeführt wird, sich radial nach außen erstreckt, einen Stumpfabschnitt (56), der zwischen dem Bodenabschnitt (58) und dem Spitzenende (52) bereitgestellt ist, und einen Schaftabschnitt (60) beinhaltet, der den Stumpfabschnitt (56) und den Bodenabschnitt (58) des Fußes (54) verkoppelt, wobei der Fuß (54) zum Eingebettet- und Gesichertsein in der Lauffläche (18) des Reifens konfiguriert ist, in der der Spike (50) konfiguriert ist, um montiert zu werden;
wobei die Umfangslinie oder der Querschnitt des angeflanschten Bodenabschnitts (58), wenn bei Ansicht von oben auf den Spike (50) entlang einer Achse von dem Spitzenende (52) zu dem angeflanschten Bodenabschnitt (58) angesehen, aus einer halbzylindrischen (117) oder halbellipsoidischen Seite und entweder drei planaren Seiten (111, 113, 115), einer planaren Seite und zwei konkaven Seiten oder zwei planaren Seiten und einer halbzylindrischen, halbellipsoidischen oder konkaven Seite besteht oder diese umfasst;
**dadurch gekennzeichnet, dass** das Spitzenende (52), wenn bei Ansicht von oben auf den Spike (50) entlang einer Achse von dem Spitzenende (52) zu dem angeflanschten Bodenabschnitt (58) angesehen, eine Umfangslinie oder einen Querschnitt aufweist, der aus (i) drei konkaven Seiten (71, 73, 75), zwei konvexen Seiten und einer planaren Seite (74), (ii) drei konkaven Seiten (91, 93, 95) und drei konvexen Seiten oder (iii) drei konkaven Seiten (71, 73, 75) und drei planaren Seiten (72, 74, 76) besteht oder diese umfasst; und/oder
dadurch, dass der Querschnitt oder die Umfangslinie des Stumpfabschnitts (56) eine flache Seite (92), die in Umfangsrichtung zwischen einer ersten und einer zweiten konkaven Vertiefung (91, 93) angeordnet ist, und zwei konvexe Seiten (94, 96) beinhaltet, die in Umfangsrichtung durch eine dritte konkave Vertiefung (95) getrennt sind.

2. Spike nach Anspruch 1, wobei die Umfangslinie oder der Querschnitt des Stumpfabschnitts (56), wenn bei Ansicht von oben auf den Spike (50) entlang einer Achse von dem Spitzenende (52) zu dem angeflanschten Bodenabschnitt (58) angesehen, eine polygonale Form aufweist, die vorzugsweise aus (i) drei konkaven Seiten (91, 93, 95), zwei konvexen Seiten (94, 96) und einer planaren Seite (92), (ii) drei konkaven Seiten (91, 93, 95) und drei konvexen Seiten oder (iii) drei konkaven Seiten (91, 93, 95) und drei planaren Seiten besteht oder diese umfasst.

3. Spike nach Anspruch 1 oder 2, wobei die Umfangslinie oder der Querschnitt des angeflanschten Bodenabschnitts (58), wenn bei Ansicht von oben auf den Spike (50) entlang einer Achse von dem Spitzenende (52) zu dem angeflanschten Bodenabschnitt (58) angesehen, im Wesentlichen die Form eines Tropfens aufweist.

4. Spike nach wenigstens einem der vorhergehenden Ansprüche, wobei das Spitzenende (52), wenn bei Ansicht von oben auf den Spike (50) entlang einer Achse von dem Spitzenende (52) zu dem angeflanschten Bodenabschnitt (58) angesehen, eine hexagonalartige Querschnittsform aufweist, wobei das Spitzenende (52) sich von einer radial äußersten Oberfläche des Stumpfabschnitts (56) des Fußes (54) radial nach außen erstreckt.

5. Spike nach wenigstens einem der vorhergehenden Ansprüche, wobei der Querschnitt oder die Umfangslinie des Stumpfabschnitts (56) eine flache Seite (92), die in Umfangsrichtung zwischen der ersten und der zweiten konkaven Vertiefung (91, 93) angeordnet ist, und eine erste und eine zweite konvexe Seite (94, 96) beinhaltet, die in Umfangsrichtung durch eine dritte konkave Vertiefung (95) getrennt sind, wobei die erste konkave Vertiefung (91) angrenzend an die erste konvexe Seite (94) ist und die zweite konkave Vertiefung (93) angrenzend an die zweite konvexe Seite (96) ist.

6. Spike nach wenigstens einem der vorhergehenden Ansprüche, wobei der Schaftabschnitt (60) einen dünneren Querschnitt im Vergleich zu dem angeflanschten Bodenabschnitt (58) aufweist und/oder wobei der Schaftabschnitt (60) einen dünneren Querschnitt im Vergleich zu dem Stumpfabschnitt (56) aufweist.

7. Spike nach wenigstens einem der vorhergehenden Ansprüche, wobei das Spitzenende (52) eine radial äußerste Oberfläche mit drei oder vier vorzugsweise im Allgemeinen planaren Oberflächen aufweist, die aufeinandertreffen, um einen Außenpunkt (121) auszubilden.

8. Reifen, der eine Lauffläche (18) aufweist, wobei die Lauffläche (18) eine Vielzahl von Spikes (50) nach wenigstens einem der vorherigen Ansprüche umfasst.

9. Reifen nach Anspruch 8, der eine erste Vielzahl von ersten Spikes (50), die in einer ersten Region (172) der Lauffläche (18) angeordnet sind, wobei die ersten Spikes (50) der ersten Vielzahl von ersten Spikes (50) jeweils eine erste Ausrichtungsrichtung des angeflanschten Bodenabschnitts (58) aufweisen, wenn bei Ansicht von oben auf den Spike (50) entlang einer Achse von dem Spitzenende (52) zu dem angeflanschten Bodenabschnitt (58) angesehen, und eine zweite Vielzahl von zweiten Spikes (151) aufweist, die in einer zweiten Region (171) der Lauffläche (18) angeordnet sind, wobei die zweiten Spikes (151) der zweiten Vielzahl von Spikes (151) jeweils eine zweite Ausrichtungsrichtung des angeflanschten Bodenabschnitts (58) aufweisen, wenn bei Ansicht von oben auf den Spike (50) entlang einer Achse von dem Spitzenende (52) zu dem angeflanschten Bodenabschnitt (58) angesehen, wobei die ersten Spikes (50) und/oder die zweiten Spikes (151) Spikes nach wenigstens einem der Ansprüche 1 bis 9 sind; und
wobei (i) die erste Ausrichtungsrichtung in einem Bereich von 75 bis 105 Grad, vorzugsweise 90 Grad, relativ zu der zweiten Ausrichtungsrichtung gedreht ist, und/oder (ii) wobei die erste Ausrichtungsrichtung parallel zu der Umfangsrichtung des Reifens ist oder einen Winkel in einem Bereich von +15 Grad bis -15 Grad mit der Umfangsrichtung des Reifens bildet und die zweite Ausrichtungsrichtung parallel zu der axialen Richtung des Reifens ist oder einen Winkel in einem Bereich von +15 Grad bis -15 Grad mit der axialen Richtung des Reifens bildet.

10. Reifen nach Anspruch 9, der ferner eine dritte Vielzahl von dritten Spikes (152) umfasst, die in einer dritten Region (173) der Lauffläche (18) angeordnet sind, wobei die dritten Spikes (152) der dritten Vielzahl von Spikes (152) jeweils eine dritte Ausrichtungsrichtung des angeflanschten Bodenabschnitts (58) aufweisen, wenn bei Ansicht von oben auf den Spike (50) entlang einer Achse von dem Spitzenende (52) zu dem angeflanschten Bodenabschnitt (58) angesehen; wobei
(i) die dritte Vielzahl von dritten Spikes (152) Spikes nach wenigstens einem der Ansprüche 1 bis 9 sind; und/oder
(ii) die dritte Ausrichtungsrichtung parallel zu der ersten Ausrichtungsrichtung ist oder einen Winkel in einem Bereich von +15 Grad bis -15 Grad mit der ersten Ausrichtungsrichtung bildet; und/oder
(iii) die dritte Ausrichtungsrichtung senkrecht zu der zweiten Ausrichtungsrichtung ist oder einen Winkel in einem Bereich von +15 Grad bis -15 Grad mit der zweiten Ausrichtungsrichtung bildet.

11. Reifen nach Anspruch 9 oder 10, wobei die ersten Spikes (50) und die zweiten Spikes (151) oder die ersten, zweiten und dritten Spikes (50, 151, 152) jeweils eine identische Konstruktion aufweisen.

12. Reifen nach wenigstens einem der Ansprüche 9 bis 11, wobei die zweite Region (171) ein Schulterabschnitt der Lauffläche (18) ist, die erste Region (172) ein Mittelabschnitt der Lauffläche (18) ist und die dritte Region (173) ein anderer Schulterabschnitt der Lauffläche (18) ist.

13. Reifen nach wenigstens einem der Ansprüche 9, 10 oder 12, wobei die ersten Spikes (50) jeweils ein Spitzenende (52) mit einer ersten Größe aufweisen, die zweiten Spikes (151) jeweils ein Spitzenende (52) mit einer zweiten Größe aufweisen und die dritten Spikes (152) jeweils ein Spitzenende (52) mit der zweiten Größe aufweisen, wobei die erste Größe größer als die zweite Größe oder die zweite Größe größer als die erste Größe ist.

14. Reifen nach wenigstens einem der Ansprüche 9 bis 13, wobei die erste Ausrichtungsrichtung einen Winkel in einem Bereich von +30 Grad bis +60 Grad mit der axialen Richtung des Reifens bildet und die zweite Ausrichtungsrichtung einen Winkel in einem Bereich von -30 Grad bis -60 Grad mit der axialen Richtung des Reifens bildet.

## Revendications

1. Crampon qui est configuré pour venir s'insérer dans une bande de roulement (18) d'un bandage pneumatique, le crampon (50) comprenant :
une extrémité en forme de pointe (52) qui est configurée pour faire saillie par rapport à la portion (18) faisant office de bande de roulement pour une mise en contact avec une surface de route ;
une base (54) qui englobe une portion inférieure (58) du type à épaulement, qui est prévue sur une extrémité du crampon (50) à l'opposé de l'extrémité en forme de pointe (52) et, lorsque le crampon (50) a été inséré dans la bande de roulement (18), en s'étendant vers l'extérieur dans la direction radiale, une portion en forme de souche (56) qui est prévue entre la portion inférieure (58) et l'extrémité en forme de pointe (52) et une portion en forme de tige (60) qui relie l'une à l'autre la portion en forme de souche (56) et la portion inférieure (58) de la base (54), la base (54) étant configurée pour être encastrée et pour être fixée dans la bande de roulement (18) du bandage pneumatique dans laquelle le crampon (50) est configuré pour être monté ;
dans lequel la ligne circonférentielle ou la section transversale de la portion inférieure (58) du type à épaulement, lorsqu'on regarde dans une vue de sommet le crampon (50) le long d'un axe qui s'étend depuis l'extrémité en forme de pointe (52) jusqu'à la portion inférieure (58) du type à épaulement, est constituée par : un côté semi-cylindrique (117) ou un côté semi-ellipsoïde et, soit trois côtés planes (111, 113, 115), soit un côté plane et deux côtés concaves ou encore deux côtés planes et un côté semi-cylindrique, semi-ellipsoïde ou concave ou comprend les côtés en question ;
**caractérisé en ce que** l'extrémité en forme de pointe (52) possède, lorsqu'on regarde dans une vue de sommet le crampon, le long d'un axe qui s'étend depuis l'extrémité en forme de pointe (52) jusqu'à la portion inférieure (58) du type à épaulement, une ligne circonférentielle ou une section transversale qui est constituée par : (i) trois côtés concaves (71, 73, 75), deux côtés convexes et un côté plane (74) ; (ii) trois côtés concaves (91, 93, 95) et trois côtés convexes ; ou (iii) trois côtés concaves (71, 73, 75) et trois côtés planes (72, 74, 76) ou qui comprend les côtés en question ; et/ou **en ce que**
la section transversale ou la ligne circonférentielle de la portion en forme de souche (56) englobe un côté plat (92) qui est disposé en position circonférentielle entre un premier creux concave et un deuxième creux concave (91, 93) et deux côtés convexes (94, 96) qui sont séparés en position circonférentielle par un troisième creux concave (95).

2. Crampon selon la revendication 1, dans lequel la ligne circonférentielle ou la section transversale de la portion en forme de souche (56), lorsqu'on regarde dans une vue de sommet le crampon (50) le long d'un axe qui s'étend depuis l'extrémité en forme de pointe (52) jusqu'à la portion inférieure (58) du type à épaulement, possède une configuration de forme polygonale qui, de préférence, est constituée par : (i) trois côtés concaves (91, 93, 95), deux côtés convexes (94, 96) et un côté plane (92) ; (ii) trois côtés concaves (91, 93, 95) et trois côtés convexes ; ou (iii) trois côtés concaves (91, 93, 95) et trois côtés planes ou comprend les côtés en question.

3. Crampon selon la revendication 1 ou 2, dans lequel la ligne circonférentielle ou la section transversale de la portion inférieure (58) du type à épaulement, lorsqu'on regarde dans une vue de sommet le crampon (50) le long d'un axe qui s'étend depuis l'extrémité en forme de pointe (52) jusqu'à la portion inférieure (58) du type à épaulement, possède une configuration en forme de larme.

4. Crampon selon au moins une des revendications précédentes, dans lequel l'extrémité en forme de pointe (52) possède, lorsqu'on regarde dans une vue de sommet le crampon (50) le long d'un axe qui s'étend depuis l'extrémité en forme de pointe (52) jusqu'à la portion inférieure (58) du type à épaulement, une configuration de forme hexagonale en section transversale, l'extrémité en forme de pointe (52) s'étendant vers l'extérieur dans la direction radiale à partir d'une surface, la plus externe dans la direction radiale, de la portion en forme de souche (56) de la base (54).

5. Crampon selon au moins une des revendications précédentes, dans lequel la section transversale ou la ligne circonférentielle de la portion en forme de souche (56) englobe un côté plat (92) qui est disposé en position circonférentielle entre un premier creux concave et un deuxième creux concave (91, 93) et un premier côté convexe et un deuxième côté convexe (94, 96) qui sont séparés dans la direction circonférentielle par un troisième creux concave (95), le premier creux concave (91) étant adjacent au premier côté convexe (94) et le deuxième creux concave (93) étant adjacent au deuxième côté convexe (96).

6. Crampon selon au moins une des revendications précédentes, dans lequel la portion en forme de tige (60) possède une section transversale plus mince par rapport à celle de la portion inférieure (58) du type à épaulement ; et/ou dans lequel la portion en forme de tige (60) possède une section transversale plus mince par rapport à celle de la portion en forme de souche (56).

7. Crampon selon au moins une des revendications précédentes, dans lequel l'extrémité en forme de pointe (52) possède une surface la plus externe dans la direction radiale qui comprend trois ou quatre surfaces de préférence généralement de forme plane qui convergent afin de former une pointe externe (121).

8. Bandage pneumatique qui possède une bande de roulement (18), la bande de roulement (18) comprenant un certain nombre de crampons (50) selon au moins une des revendications précédentes.

9. Bandage pneumatique selon la revendication 8 qui possède une première quantité de premiers crampons (50) qui sont disposés dans une première zone (172) de la bande de roulement (18), les premiers crampons (50) de la première quantité de premiers crampons (50) possédant chacun une première direction d'orientation de la portion inférieure (58) du type à épaulement lorsqu'on regarde dans une vue de sommet le crampon (50) le long d'un axe qui s'étend depuis l'extrémité en forme de pointe (52) jusqu'à la portion inférieure (58) du type à épaulement, et une deuxième quantité de deuxièmes crampons (151) qui sont disposés dans une deuxième zone (171) de la bande de roulement (18), les deuxièmes crampons (151) de la deuxième quantité de crampons (151) possédant chacun une deuxième direction d'orientation de la portion inférieure (58) du type à épaulement lorsqu'on regarde dans une vue de sommet le crampon (50) le long d'un axe qui s'étend depuis l'extrémité en forme de pointe (52) jusqu'à la portion inférieure (58) du type à épaulement ; dans lequel les premiers crampons (50) et/ou les deuxièmes crampons (151) représentent des crampons selon au moins une des revendications 1 à 9 ; et dans lequel (i) la première direction d'orientation représente une direction que l'on obtient après une rotation dans une plage de 75 à 105 degrés, de préférence de 90 degrés, par rapport à la deuxième direction d'orientation ; et/ou (ii) dans lequel la première direction d'orientation est parallèle à la direction circonférentielle du bandage pneumatique ou forme un angle dans une plage de +15 degrés à -15 degrés avec la direction circonférentielle du bandage pneumatique et la deuxième direction d'orientation est parallèle à la direction axiale du bandage pneumatique ou forme un angle dans une plage de +15 degrés à -15 degrés avec la direction axiale du bandage pneumatique.

10. Bandage pneumatique selon la revendication 9, qui comprend en outre une troisième quantité de troisièmes crampons (152) qui sont disposés dans une troisième zone (173) de la bande de roulement (18), les troisièmes crampons (152) de la troisième quantité de crampons (152) possédant chacun une troisième direction d'orientation de la portion inférieure (58) du type à épaulement lorsqu'on regarde dans une vue de sommet le crampon (50) le long d'un axe qui s'étend depuis l'extrémité en forme de pointe (52) jusqu'à la portion inférieure (58) du type à épaulement ; dans lequel
(i) la troisième quantité de troisièmes crampons (152) représente des crampons selon au moins une des revendications 1 à 9 ; et/ou
(ii) la troisième direction d'orientation est parallèle à la première direction d'orientation ou forme un angle dans une plage de +15 degrés à -15 degrés avec la première direction d'orientation ; et/ou
(iii) la troisième direction d'orientation est perpendiculaire à la deuxième direction d'orientation ou forme un angle dans une plage de +15 degrés à -15 degrés avec la deuxième direction d'orientation.

11. Bandage pneumatique selon la revendication 9 ou 10, dans lequel les premiers crampons (50) et les deuxièmes crampons (151) ou bien les premiers, les deuxièmes et troisièmes crampons (50, 151, 152) possèdent chacun une structure identique.

12. Bandage pneumatique selon au moins une des revendications 9 à 11, dans lequel la deuxième zone (171) représente une portion qui fait office d'épaulement de la bande de roulement (18), la première zone (172) représente une portion centrale de la bande de roulement (18) et la troisième zone (173) représente une autre portion faisant office d'épaulement de la bande de roulement (18).

13. Bandage pneumatique selon au moins une des revendications 9, 10 ou 12, dans lequel les premiers crampons (50) possèdent chacun une extrémité en forme de pointe (52) qui possède une première dimension, les deuxièmes crampons (151) possèdent chacun une extrémité en forme de pointe (52) qui possède une deuxième dimension, et les troisièmes crampons (152) possèdent chacun une extrémité en forme de pointe (52) qui possède ladite deuxième dimension, dans lequel la première dimension est supérieure à la deuxième dimension ou bien la deuxième dimension est supérieure à la première dimension.

14. Bandage pneumatique selon au moins une des revendications 9 à 13, dans lequel la première direction d'orientation forme un angle dans une plage de +30 degrés à +60 degrés avec la direction axiale du bandage pneumatique et la deuxième direction d'orientation forme un angle dans une plage de -30 degrés à -60 degrés avec la direction axiale du bandage pneumatique.
